# EUROPEAN PATENT APPLICATION

(11) **EP 1 862 653 A1**
(43) Date of publication of application: **05.12.2007**
(21) Application number: 06729673.1
(22) Date of filing: 22.03.2006
(51) Int. Cl.: F01N 7/10, F01N 7/08, F02B 37/02, F02B 39/00

(54) **EXHAUST SYSTEM PART**

(30) Priority: 24.03.2005 JP 2005086851
(71) Applicant: HITACHI METALS, LTD., Minato-ku, Tokyo 105-8614 (JP)
(72) Inventor: ITOH, Kenji, tama, 3300841 (JP)
(74) Representative: Strehl, Peter
(86) International application number: PCT/JP2006/305706
(87) International publication number: WO 2006/101125

(57) **Abstract**

An exhaust member having two or more exhaust ports separated by a partition wall extending between an inner wall of a tubular portion, wherein said partition wall has the minimum thickness A in a range within 1/2 of the length of said partition wall from its longitudinal middle point as a center, when viewed in an arbitrary transverse cross section of said tubular portion (including an opening end surface) having said partition wall; wherein said partition wall becomes gradually wider outside said range; and wherein each outer surface of said partition wall exists in a region sandwiched by (a) an inner line comprising a parallel line H1, H2 separate from the longitudinal centerline of said partition wall by a distance of A/2, and an arc R1, R2 tangentially connected to said parallel line H1, H2 and said inner wall and having a radius r1, r2, wherein both r1 and r2 are 1/3 x A or more, meeting r1 + r2 = 1.9A, and (b) outer line comprising a parallel line H3, H4 separate from the longitudinal centerline of said partition wall by a distance of 3/2 x A, and an arc R3, R4 tangentially connected to said parallel line H3, H4 and said inner wall and having a radius r3, r4, wherein both r3 and r4 are 1/3 x A or more, meeting r3 + r4 = 4A.

## Description

### FIELD OF THE INVENTION

The present invention relates to an exhaust member for engines, such as an exhaust manifold, a turbine housing, etc., which is free from the likelihood of cracking to its outer surface.

### BACKGROUND OF THE INVENTION

Some exhaust members for multi-cylinder (series-four-cylinder, series-six-cylinder, etc.) engines, such as exhaust manifolds, turbine housings, etc., have divided exhaust ports to prevent the interference of an exhaust gas discharged from each engine cylinder, and backpressure increase. The division of the exhaust port stabilizes the performance and operation of the engine.

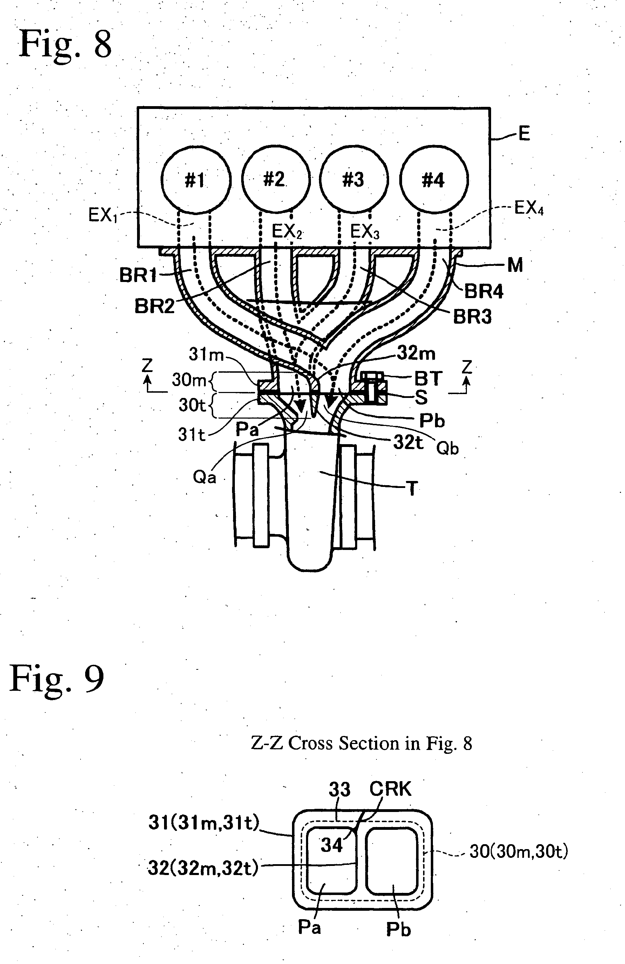

As one example of exhaust members, Fig. 8 shows an exhaust manifold M connected to cylinders #1 to #4 of a series-four-cylinder engine E, and a turbine housing T connected to a flange of the exhaust manifold M. Fig. 9 is an enlarged cross-sectional view taken along the line Z-Z in Fig. 8. Combustion usually occurs in the order of cylinders #1-#3-#4-#2 in the series-four-cylinder engine E.

The exhaust manifold M comprises branch tubes BR1-BR4 connected to four exhaust outlets EX1-EX4 of the engine E, and a downstream-side tubular portion 30m to which the branch tubes BR1-BR4 converge. The tubular portion 30m comprises a flange 31 m formed at a downstream-side end periphery, and two exhaust ports Pa, Pb separated by a partition wall 32m. The branch tubes BR1, BR4 converge to the exhaust port Pb, and the branch tubes BR2, BR3 converge to the exhaust port Pa.

An upstream-side tubular portion 30t of the turbine housing T comprises a flange 31t formed at an upstream-side end periphery, and two intake ports Qa, Qb separated by a partition wall 32t. The flange 31t has substantially the same shape as that of the flange 31 m of the exhaust manifold M. The partition wall 32t and the intake ports Qa, Qb are shaped and arranged such that when the flange 31t is connected to the flange 31m of the exhaust manifold M via a gasket S with bolts BT, the partition wall 32m of the exhaust manifold M is smoothly connected to the partition wall 32t of the turbine housing T, and the exhaust ports Pa, Pb are smoothly connected to the intake ports Qa, Qb.

Because the downstream-side tubular portion 30m of the exhaust manifold M and the upstream-side tubular portion 30t of the turbine housing T have essentially the same shape and function as is clear from Fig. 8, explanation will be made only on the downstream-side tubular portion 30m. Its explanation is applicable to the upstream-side tubular portion 30t of the turbine housing T, or tubular portions of other similar exhaust members, as it is.

As shown in Fig. 9, a partition wall 32 connected to the inner wall of the tubular portion 30 is repeatedly subjected to compression stress and tensile stress by heating and cooling due to the start and stop of the engine E. However, because the expansion and shrinkage of the partition wall 32 is constrained by the flange 31 formed at a periphery of the tubular portion 30, cracks CRK are likely to be generated in a connecting portion 34 of the partition wall 32 and the tubular portion 30. When the cracks CRK reach the outer surface of the tubular portion 30, an exhaust gas is likely to leak.

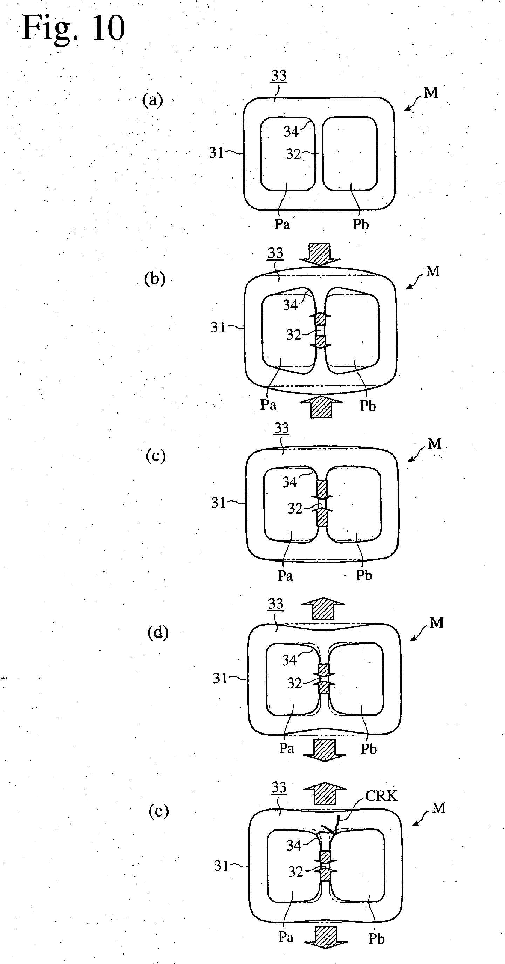

The mechanism of generating cracks CRK will be explained in detail referring to Figs. 10(a)-10(e). Fig. 10(a) shows the basic shapes of the partition wall 32m and the exhaust port Pa, Pb of the exhaust manifold M in the opening end surface 33. As shown in Fig. 10(b), when an engine (not shown) is operated, the partition wall 32 is heated by a high-temperature exhaust gas. As shown in Fig. 10(c), however, the partition wall 32 cannot expand freely because of a strong constraint by the flange 31, resulting in plastic deformation and the generation of compression strain. When the engine stops so that the exhaust manifold M is cooled to room temperature, the partition wall 32 tends to thermally shrink, exceeding thermal plastic deformation as shown in Fig. 10(d). However, because it is strongly constrained by the flange 31 as shown in Fig. 10(e), large tensile strain is generated in the partition wall 32 and/or the connecting portion 34. When heating and cooling are repeated by the start and stop of the engine, it is likely that cracks CRK generated in the partition wall 32 turn the exhaust ports Pa and Pb communicable, and that cracks CRK generated in the connecting portion 34 reach the outer surface of the tubular portion 30.

When the exhaust ports Pa and Pb become communicable by cracks CRK generated in the partition wall 32, exhaust interference and backpressure increase occur. Also, the cracks CRK reaching to the outer surface of the tubular portion 30 allow an exhaust gas to eject from the exhaust ports Pa, Pb, and turn the operation of a turbine housing, if any, unstable, resulting in engine performance decrease.

To prevent cracks from generating in the partition wall and the tubular portion of the exhaust manifold, JP 60-95118 U proposes, as shown in Fig. 11, a partition wall 32 having a slit SLT deeper than the thickness of a flange 31 to absorb thermal expansion and shrinkage. It has been found, however, that the slit SLT causes turbulence in an exhaust gas flowing through the ports, resulting in backpressure increase and thus engine power decrease.

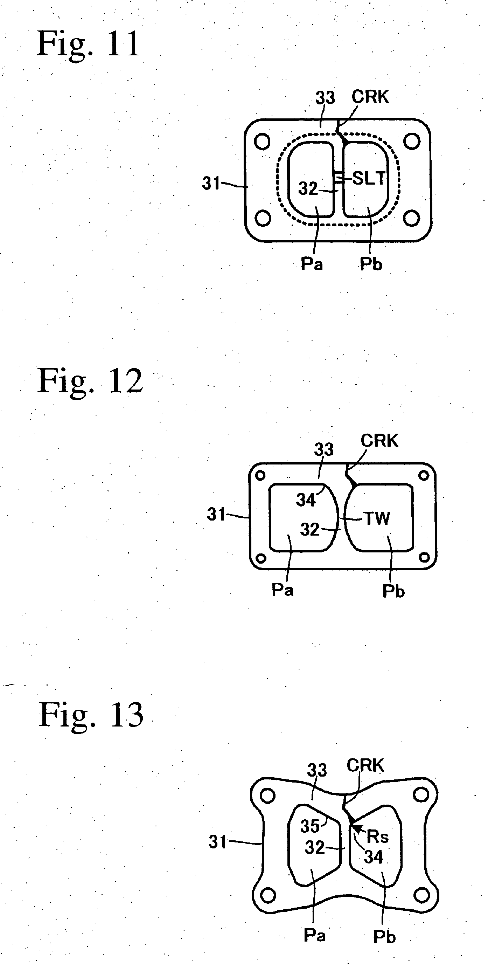

JP 2-3-9529 U proposes, as shown in Fig. 12, an exhaust manifold locally having a thin-wall portion TW in a partition wall 32, so that the thin-wall portion TW is easily deformed to alleviate thermal stress when the partition wall 32 is thermally deformed. The thin-wall portion TW locally formed in the partition wall 32 can prevent the generation of cracks CRK, without disturbing the exhaust gas unlike when the slit SLT is formed in the partition wall 32 (JP 60-95118 U). It has been found, however, that cracks CRK reaching the outer surface of the exhaust member are likely formed depending on the shape of the connecting portion 34 of the partition wall 32 and the tubular portion 30. Also, in the shape of the partition wall 32 shown in Fig. 12, thick connecting portions 34 make the overall exhaust manifold extremely heavy.

JP 7-217438 A proposes, as shown in Fig. 13, an exhaust manifold comprising exhaust ports Pa, Pb each having a substantially trapezoidal cross section, and arcuate connecting portions 34 each having a small radius of curvature Rs for connecting a partition wall 32 and a linear inner wall 35, thereby dispersing thermal stress in the linear inner wall 35. It has been found, however, that cracks CRK reaching the outer surface of the exhaust member are likely formed depending on the shape of the connecting portion 34 connecting the partition wall 32 and the linear inner wall 35. Also, the exhaust port is restricted to have a substantially trapezoidal cross section, resulting in extremely small freedom of design.

### OBJECTS OF THE INVENTION

Accordingly, an object of the present invention is to provide an exhaust member free from the likelihood of cracking to its outer surface, without extreme restriction of the cross section shape of an exhaust port.

### DISCLOSURE OF THE INVENTION

As a result of intense research in view of the above object, it has been found that it is difficult to completely prevent cracking due to thermal strain by expansion and compression, in a connecting portion between a partition wall and a tubular portion without extremely increasing the weight of an exhaust member, and that the above problem can be overcome by inducing cracks, if any, to a center portion of the partition wall while preventing them from propagating to the outer surface of the exhaust member. The present invention has been completed based on such findings.

Thus, the exhaust member of the present invention has two or more exhaust ports separated by a partition wall extending between an inner wall of a tubular portion, said partition wall having the minimum thickness A in a range within 1/2 of the length of said partition wall from its longitudinal middle point as a center, and becoming gradually wider outside that range, when viewed in an arbitrary transverse cross section of said tubular portion (including an opening end surface) having said partition wall; and each outer surface of said partition wall existing in a region sandwiched by (a) each inner line comprising a parallel line H1, H2 separate from a longitudinal centerline of said partition wall by a distance of A/2, and an arc R1, R2 tangentially connected to said parallel line H1, H2 and said inner wall and having a radius r1, r2, wherein both r1 and r2 are 1/3 x A or more, meeting r1 + r2 = 1.9A, and (b) each outer line comprising a parallel line H3, H4 separate from the longitudinal centerline of said partition wall by a distance of 3/2 x A, and an arc R3, R4 tangentially connected to said parallel line H3, H4 and said inner wall and having a radius r3, r4, wherein both r3 and r4 are 1/3 x A or more, meeting r3 + r4 = 4A.

The radii r1, r2 of said arcs R1, R2 preferably meet the condition of r1 + r2 = 2.5A.

It is preferable that the minimum thickness A of said partition wall is 2-10 mm, and that said partition wall is tangentially connected to said inner wall with an arc having a radius of 2-13 mm in a transverse cross section of said tubular portion having said partition wall.

### BRIEF DESCRIPTION OF THE DRAWINGS

Fig.1 (a) is a front view showing a downstream-side opening end surface of an exhaust member according to a preferred embodiment of the present invention.

Fig. 1(b) is an enlarged view showing a portion X in Fig. 1(a).

Fig.2(a) is a front view showing a downstream-side opening end surface of an exhaust member according to another preferred embodiment of the present invention.

Fig.2(b) is a front view showing a downstream-side opening end surface of an exhaust member according to a further preferred embodiment of the present invention.

Fig.2(c) is a front view showing a downstream-side opening end surface of an exhaust member according to a still further preferred embodiment of the present invention.

Fig.3(a) is a front view showing a downstream-side opening end surface of an exhaust member according to a still further preferred embodiment of the present invention.

Fig.3(b) is a front view showing a downstream-side opening end surface of an exhaust member according to a still further preferred embodiment of the present invention.

Fig.3(c) is a front view showing a downstream-side opening end surface of an exhaust member according to a still further preferred embodiment of the present invention.

Fig.3(d) is a front view showing a downstream-side opening end surface of an exhaust member according to a still further preferred embodiment of the present invention.

Fig.4(a) is a perspective view showing the shape of a test piece used in Example 1.

Fig.4(b) is a front view showing the shape of a test piece used in Example 1.

Fig.4(c) is an enlarged front view showing the shape of a partition wall of a test piece used in Example 1.

Fig.4(d) is a front view showing the shape of a test piece used in Comparative Example 1.

Fig.4(e) is a front view showing the shape of a test piece used in Comparative Example 2.

Fig.5(a) is a front view showing the shape of a test piece used in Example 2.

Fig.5(b) is an enlarged front view showing the shape of a partition wall of a test piece used in Example 2.

Fig.5(c) is a front view showing the shape of a test piece used in Comparative Example 3.

Fig.6 is a schematic view showing a thermal fatigue test machine.

Fig.7(a) is a perspective view showing the turbine housing of Example 3 after the thermal fatigue test.

Fig.7(b) is a perspective view showing the turbine housing of Comparative Example 4 after the thermal fatigue test.

Fig.8 is a cross-sectional view showing one example of the exhaust member connected to a series-four-cylinder engine.

Fig.9 is an enlarged cross-sectional view taken along the line Z-Z in Fig. 8.

Fig.10 is a schematic view explaining the mechanism of generating cracks.

Fig.11 is a front view showing a downstream-side opening end surface of the exhaust member described in JU 60-95118 A.

Fig.12 is a front view showing a downstream-side opening end surface of the exhaust member described in JU 2-39529 A.

Fig.13 is a front view showing a downstream-side opening end surface of the exhaust member described in JP 7-217438 A.

### DESCRIPTION OF THE BEST MODE OF THE INVENTION

The exhaust member of the present invention will be explained in detail below referring to the attached drawings, though the present invention is not restricted to those shown in the figures. It should be noted that the same reference numerals are assigned to the same parts or portions, with their explanation omitted.

First Embodiment

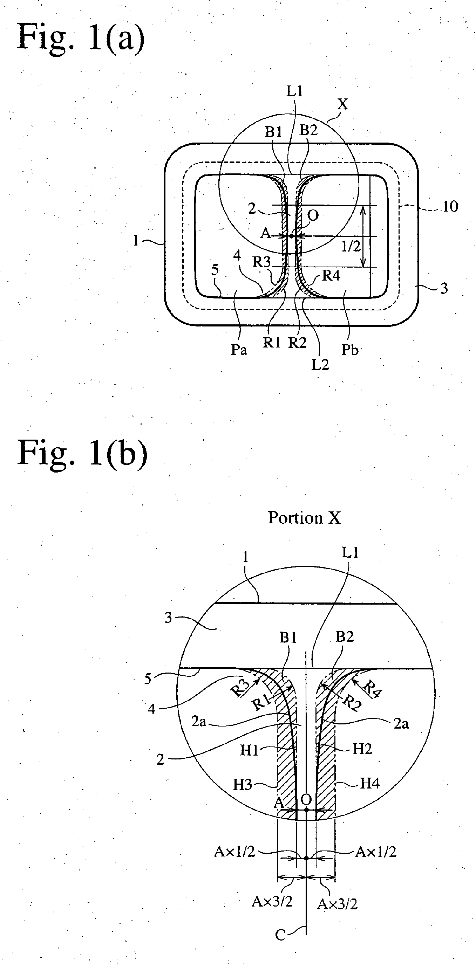

Fig. 1(a) is a front view showing an opening end surface 3 of an exhaust member in the first embodiment, and Fig. 1(b) is an enlarged view showing a portion X in Fig. 1(a). This exhaust member has a flange 1 having a substantially rectangular contour, and a partition wall 2 having a center portion with a substantially linear outer surface and both end portions each with a curved outer surface. The partition wall 2 has the minimum thickness A in a range within 1/2 of the length of the partition wall 2 with its longitudinal middle point O as a center, and its curved outer surfaces are gradually wider outside that range (on the end portion sides).

Portions divided by a tangent line L1 common to exhaust ports Pa and Pb shown in Fig. 1(a) are called "flange 1" and "partition wall 2" connected to the flange 1 via a connecting portion 4. On the paper of the figure, the flange 1 is above the tangent line L1, while the partition wall 2 is below the tangent line L1. With a tangent line L2 common to the exhaust ports Pa and Pb similarly drawn on the end of the partition wall 2 opposite to the L1-side end, the smallest distance between the tangent line L 1 and the tangent line L2 is defined as the length of the partition wall 2. In a range within 3/4 of the length of the partition wall 2 from a longitudinal middle point O of the partition wall 2 as a center, a line connecting middle points of the width of the partition wall 2 is defined as a longitudinal centerline C of the partition wall. Outside the above range, a tangent line of the longitudinal centerline C at a position of 3/8 of the length of the partition wall 2 is defined as longitudinal centerline C.

Each outer surface 2a of the partition wall 2 should exist on or outside each inner line (shown by the chain line) comprising a parallel line H1, H2 separate from the longitudinal centerline C of the partition wall 2 by a distance of A/2, and an arc R1, R2 having a radius r1, r2 which is tangentially connected to the parallel line H1, H2 and the inner wall 5 of the tubular portion 10. The term "tangentially connected" used herein means that the tangent line of each arc R1, R2 is in alignment with that of each parallel line H1, H2 at a contact point of the arc R1, R2 and the parallel line H1, H2. The same is true of the contact point of the arc R1, R2 and the inner wall 5. Accordingly, each arc R1, R2 corresponds to an arc having a radius r1, r2 inscribed to the parallel line H1, H2 and the inner wall 5.

The radii r1 and r2 should meet the condition of r1 + r2 = 1.9A. When each outer surface 2a of the partition wall 2 is closer than that to the centerline C, the partition wall 2 is too thin to avoid cracking. When any one of r1 and r2 is extremely small, the connecting portion 4 of the partition wall 2 and the inner wall 5 has too large a curvature to avoid stress concentration, resulting in high likelihood of cracking. Therefore, both of r1 and r2 should be 1/3 x A or more, preferably 1/2 x A or more. Although r1 = r2 in this embodiment, r1 may not be equal to r2 as in a subsequent embodiment. Particularly in such a case, r1 and r2 should not be too small.

Because a high-temperature, high-pressure exhaust gas flows alternately through exhaust ports Pa, Pb separated by the partition wall 2, the partition wall 2 should have such thickness as to hold sufficient high-temperature strength. Because stress is concentrated particularly in the connecting portion 4, the connecting portion 4 should be thicker than the center portion. However, too thick a partition wall 2 makes the exhaust member too heavy. Accordingly, each outer surface 2a of the partition wall 2 should exist on or inside each outer line (shown by the chain line) comprising a parallel line H3, H4 separate from the longitudinal centerline C by a distance of 3/2 x A, and an arc R3, R4 having a radius r3, r4 and tangentially connected to the parallel line H3, H4 and the inner wall 5 of the tubular portion 10. Like the arc R1, R2, the arc R3, R4 corresponds to an arc having a radius r3, r4 and inscribed to the parallel line H3, H4 and the inner wall 5.

The radii r3 and r4 should meet the condition of r3 + r4 = 4A. When each outer surface 2a of the partition wall 2 is more distant than that from the centerline C, the partition wall 2 is so thick that an exhaust member is heavy. When any one of r3 and r4 is extremely small, the connecting portion 4 of the partition wall 2 and the inner wall 5 has too large a curvature to avoid stress concentration, resulting in high likelihood of cracking. Therefore, both of r3 and r4 should be 1/3 x A or more, preferably 1/2 x A or more. Although r3 = r4 in this embodiment, r3 may not be equal to r4 as in a subsequent embodiment. Particularly in that case, attention should be paid to avoid that r3 and r4 are too small.

In the center region 21 and the tapered region 4a, the outer surface 2a of the partition wall 2 may have a straight contour, but it preferably has a slightly curved contour. The slightly curved contour may not be arcuate. At a position at which the distance of the partition wall 2 from the middle point O is 3/8 of the length of the partition wall 2, the thickness A2 of the partition wall 2 is preferably 1.3 times or more, more preferably 1.5 times or more, of the minimum thickness A of the partition wall 2. The center region 21 is smoothly connected to the tapered region 4a.

The connecting portion 4b is preferably a curved line smoothly connecting the outer surface 2a of the partition wall 2 to the inner wall 5, more preferably an arc tangentially connected to the outer surface 2a and the inner wall 5. The arc may have such a radius that the outer surface 2a of the partition wall 2 exists between said inner line and said outer line, and the radius of the arc is preferably 1/3 x A or more, more preferably 1/2 x A or more.

Because each outer surface 2a of the partition wall 2 exists in a region B1, B2 sandwiched by said inner line and said outer line, cracking occurs predominantly in said center region 21 when a large thermal stress is applied to the partition wall 2, with other regions suffering little cracking. Even if there are cracks near the connecting portion 4 of the partition wall 2 and the flange 1, they propagate not toward the flange 1 but toward the partition wall 2 away from the flange 1, so that cracks penetrating from the exhaust ports Pa or Pb to the outer surface of the exhaust member are hardly generated. Accordingly, the above shape of the partition wall 2 can provide an exhaust member free from cracks in the tubular portion 10 without increasing the weight of the exhaust member.

In the exhaust member of the present invention, it is more preferable.that the radii r1, r2 of the arcs R1, R2 meet the condition of r1 + r2 = 2.5A, that the minimum thickness A of the partition wall is 2-10 mm, and that each outer surface of the partition wall is tangentially connected to the inner wall of the exhaust port with an arc having a radius of 2-13 mm in an arbitrary transverse cross section of the pipe. With this structure, there is less likelihood of generating cracks extending from the exhaust port to the outer surface of the exhaust member.

Second Embodiment

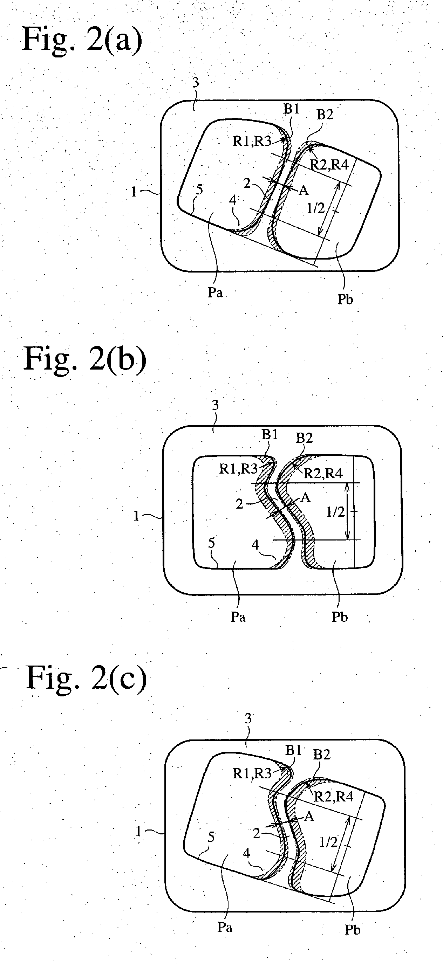

Fig. 2(a) shows an opening end surface 3 of an exhaust member in the second embodiment. This exhaust member is substantially the same as that of the first embodiment except that both partition wall 2 and exhaust ports are inclined, so that it should meet all the conditions of the first embodiment.

Third Embodiment

Fig. 2(b) shows an opening end surface 3 of an exhaust member in the third embodiment. This exhaust member is substantially the same as that of the first embodiment except that a partition wall 2 has an S shape, so that it should meet all the conditions of the first embodiment.

Fourth Embodiment

Fig. 2(c) shows an opening end surface 3 of an exhaust member in the fourth embodiment. This exhaust member is substantially the same as that of the second embodiment except that a partition wall 2 has an S shape, so that it should meet all the conditions of the first embodiment.

Fifth Embodiment

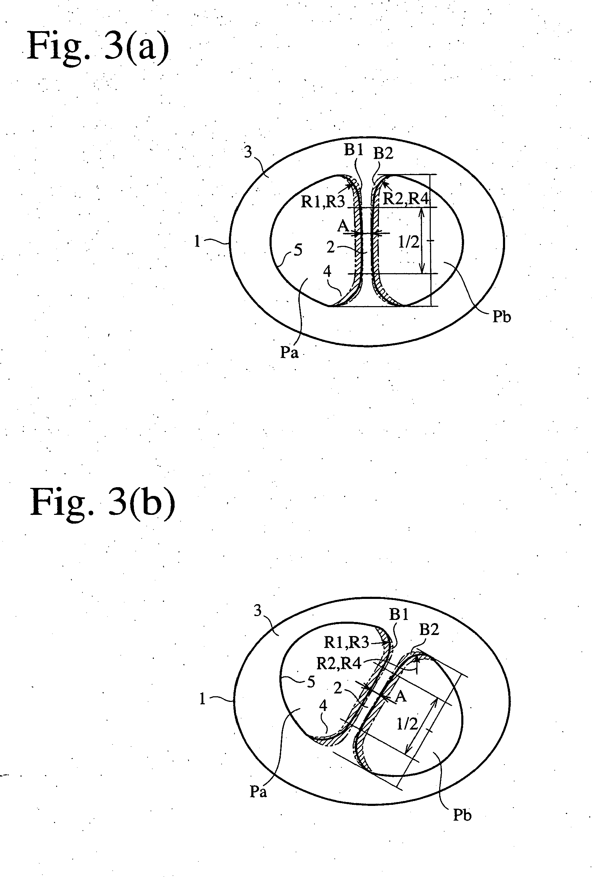

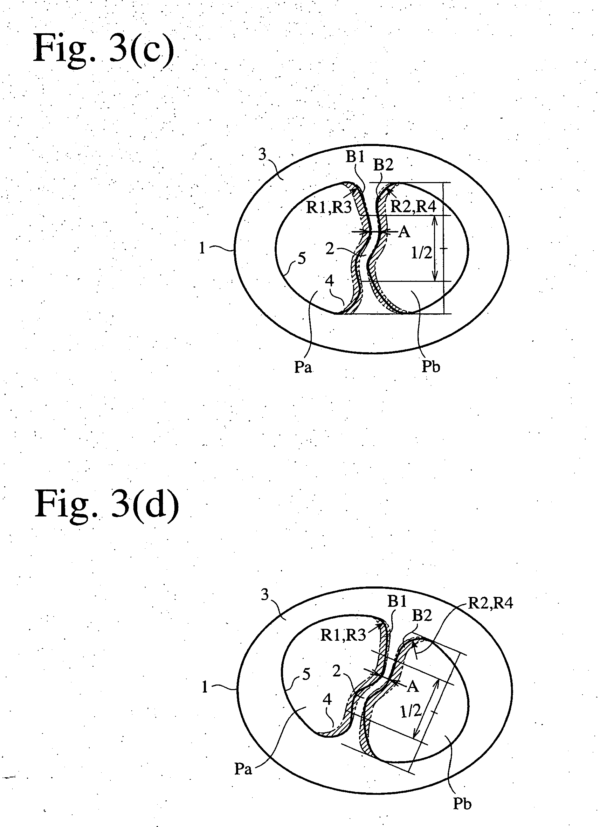

Fig. 3(a) shows an opening end surface 3 of an exhaust member in the fifth embodiment. This exhaust member is substantially the same as that of the first embodiment except that the opening end surface 3 has a circular shape, so that it should meet all the conditions of the first embodiment.

Sixth Embodiment

Fig. 3(b) shows an opening end surface 3 of an exhaust member in the sixth embodiment. This exhaust member is substantially the same as that of the fifth embodiment except that both partition wall 2 and exhaust port are inclined, so that it should meet all the conditions of the first embodiment.

Seventh Embodiment

Fig. 3(c) shows an opening end surface 3 of an exhaust member in the seventh embodiment. This exhaust member is substantially the same as that of the fifth embodiment except that a partition wall 2 has an S shape, so that it should meet all the conditions of the first embodiment.

Eighth Embodiment

Fig. 3(d) shows an opening end surface 3 of an exhaust member in the eighth embodiment. This exhaust member is substantially the same as that of the sixth embodiment except that a partition wall 2 has an S shape, so that it should meet all the conditions of the first embodiment.

In the above second to eighth embodiments, too, the partition wall 2 has the minimum thickness A in a range (center region 4a) within 1/2 of the length of the partition wall from the longitudinal middle point O. of the partition wall as a center, and its outside region (end region 40) has a gradually increasing width. Also, each outer surface of the partition wall exists in a region sandwiched by (a) each inner line comprising a parallel line H1, H2 separate from the longitudinal centerline C of the partition wall by a distance of A/2, and an arc R1, R2 having a radius r1, r2 and tangentially connected to the parallel line H1, H2 and the inner wall, wherein both r1 and r2 are 1/3 x A or more, meeting r1 + r2 = 1.9A, and (b) each outer line comprising a parallel line H3, H4 separate from the longitudinal centerline C of the partition wall by a distance of 3/2 x A, and an arc R3, R4 having a radius of r3, r4 and tangentially connected to the parallel line H3, H4 and the inner wall, wherein both r3 and r4 are 1/3 x A or more, meeting r3 + r4 = 4A. This reduces the generation of cracks extending from the exhaust ports to the outer surface of the exhaust member without extremely increasing the weight of the exhaust member, thereby providing an exhaust member without extremely restricting the cross section shape of the exhaust port.

The present invention will be described in further detail referring to Examples below without intention of restricting the present invention thereto.

Example 1

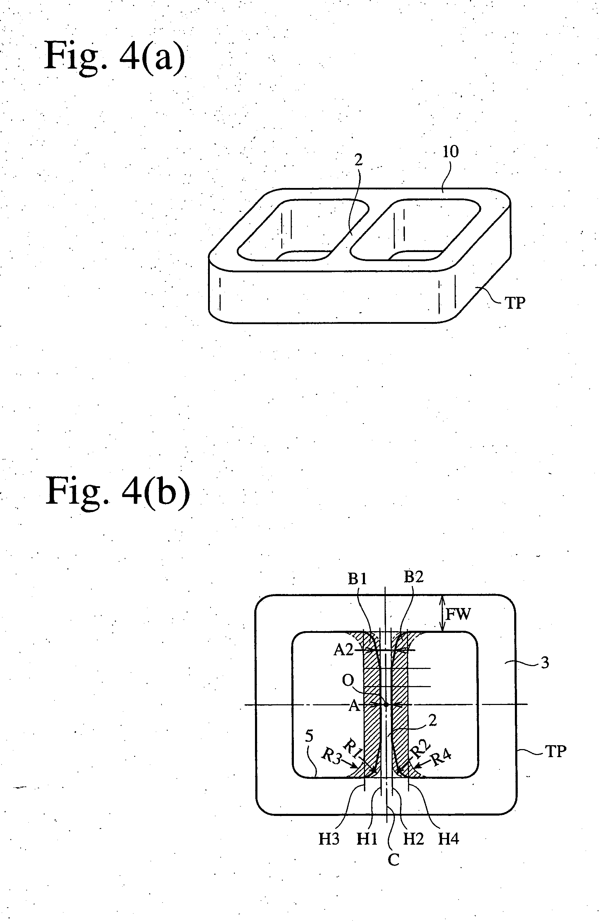

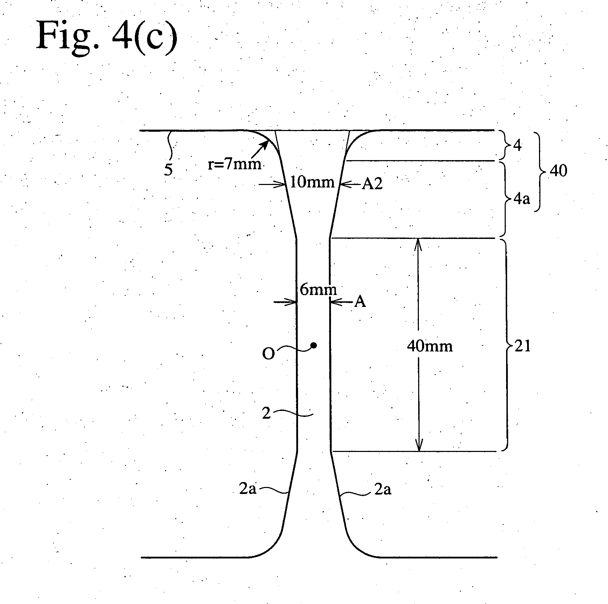

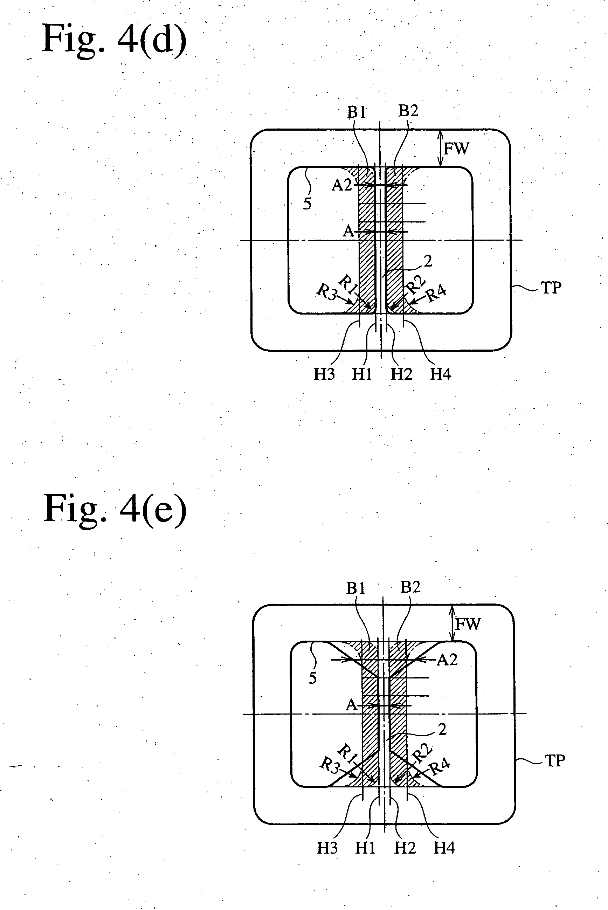

A test piece TP having the shape shown in Fig. 4(a) was produced from heat-resistant austenitic cast steel. The test piece TP had a thickness of 20 mm, the tubular portion 10 had a thickness FW of 20 mm, and the partition wall 2 had a length of 80 mm. Fig. 4(b) shows an opening end surface 3 of the test piece TP, and Fig. 4(c) is an enlarged view showing the partition wall 2. The partition wall 2 has a 6-mm-thick, flat-plate-shaped center region 21 in a range within 1/2 (40 mm) of the length of the partition wall 2 from the longitudinal middle point O as a center, and an end region 40 comprising a tapered region 4a and a connecting portion 4 outside the flat-plate-shaped center region 21. The minimum thickness A of the partition wall 2 is 6 mm, the same as that of the center region 21, and the tapered region 4a has a gradually and linearly increasing width from the end of the center region 21. The thickness A2 is 10 mm at a position separate from the longitudinal middle point O of the partition wall 2 by a distance of 30 mm, 3/8 of the length of the partition wall 2. The connecting portion 4 is in an arc shape having a radius of 7 mm and tangentially connected to the tapered region 4a and the inner wall 5 of the tubular portion 10. Table 1 shows the size of the test piece TP.

With the partition wall 2 formed as described above, each outer surface 2a of the partition wall 2 existed in a region (hatched portion B1, B2) sandwiched by (a) each inner line comprising a parallel line H1, H2 separate from the longitudinal centerline C of the partition wall 2 by a distance of A/2, namely 3 mm, and an arc R1, R2 tangentially connected to the parallel line H1, H2 and the inner wall 5 and having a radius of r 1 = r2 = 5.7 mm, wherein both r1 and r2 are 1/3 x A or more, meeting r1 + r2 = 1.9A, and (b) each outer line comprising a parallel line H3, H4 separate from the longitudinal centerline C of the partition wall 2 by a distance of 3/2 x A, namely 9 mm, and an arc R3, R4 tangentially connected to the parallel line H3, H4 and the inner wall and having a radius of r3 = r4 = 12 mm, wherein both r3 and r4 are 1/3 x A or more, meeting r3 + r4 = 4A.

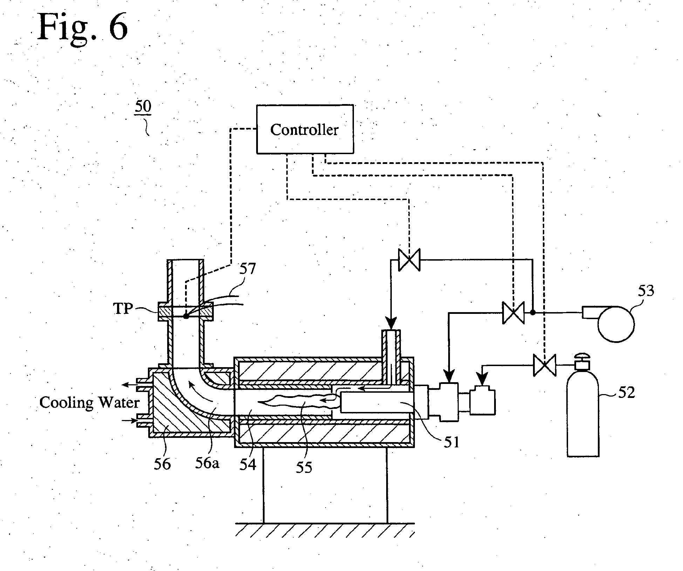

The test piece TP was subjected to a thermal fatigue test by a thermal fatigue test apparatus described in Japanese Patent 2533885. In the thermal fatigue test machine 50 shown in Fig. 6, LPG from an LPG source 52 and air from a compressor 53 are supplied to a burner 51, and air is forcedly supplied to a combustion chamber 54, so that LPG is ignited in the combustion chamber 54 and burned in the burner 51. Flame 55 from the burner 51 is injected into the combustion chamber 54, and the resultant high-temperature combustion gas is caused to flow to the test piece TP via a combustion gas passage 56a of a cooling block 56 to heat the test piece TP. The combustion gas passage 56a is cooled by water circulating in the cooling block 56 having cooling water inlet and outlet. The test piece TP is provided with a sheath-type thermocouple 57 at its inlet. The thermal fatigue test was conducted by repeating cycles each comprising two steps of (i) heating the test piece TP until the temperature detected in the sheath-type thermocouple 57 reached 950°C and then keeping it at that temperature for 10 minutes, and (ii) stopping the supply of the combustion gas and keeping it for 10 minutes, until cracking was observed in the test piece TP. The thermal fatigue test revealed that the test piece TP of Example 1 had cracks in a longitudinal center portion of the partition wall 2, but was free from cracks extending from the exhaust port to the outer surface of the test piece TP.

Comparative Example 1

As shown in Fig. 4(d), a test piece TP was produced in the same manner as in Example 1, except that the tapered region 4a of the partition wall 2 was made to have a constant thickness of 6 mm, meaning that there was substantially no tapered region 4a, and that the connecting portion 4 was formed by an arc having a radius of 2 mm and tangentially connected to the outer surface 2a of the partition wall 2 and the inner wall 5 of the tubular portion 10. The minimum thickness A of the partition wall 2 was 6 mm, the same as the thickness of the center region 21, and the thickness A2 of the partition wall 2 was 6 mm at a position of 30 mm, 3/8 of the length of the partition wall 2 from the middle point O. Table 1 shows the size of the test piece TP. The partition wall 2 of this test piece TP had each outer surface 2a in portions other than the region (hatched portion B1, B2) described in Example 1, which was sandwiched by the inner and outer lines. Further, whenever any one of the radii r1-r4 was 1/3 x A or more, meeting r1 + r2 = 1.9A, and r3 + r4 = 4A, the partition wall 2 had each outer surface 2a existing beyond the region (hatched portion B1, B2) sandwiched by the inner and outer lines. The test piece TP of Comparative Example 1 was subjected to a thermal fatigue test as in Example 1, resulting in cracks extending from the connecting portion of the partition wall and the flange to the exhaust port to the outer surface of the test piece TP.

Comparative Example 2

As shown in Fig. 4(e), a test piece TP was produced in the same manner as in Example 1, except that the thickness A2 of the partition wall 2 was 30 mm at a position of 3/8 of the length of the partition wall from the longitudinal middle point O of the partition wall. Table 1 shows the size of the test piece TP. The partition wall 2 of this test piece TP had each outer surface 2a existing beyond the region (hatched portion B1, B2) described in Example 1, which was sandwiched by the inner and outer lines. The test piece TP was subjected to the same thermal fatigue test as in Example 1, revealing that cracks were generated in the longitudinal center portion of the partition wall 2, without cracks extending from the exhaust port to the outer surface of the test piece TP. However, the test piece TP of Comparative Example 2 was as heavy as 1.1 times the test piece TP of Example 1, resulting in 10-% decrease in the cross section area of the exhaust port.

Example 2

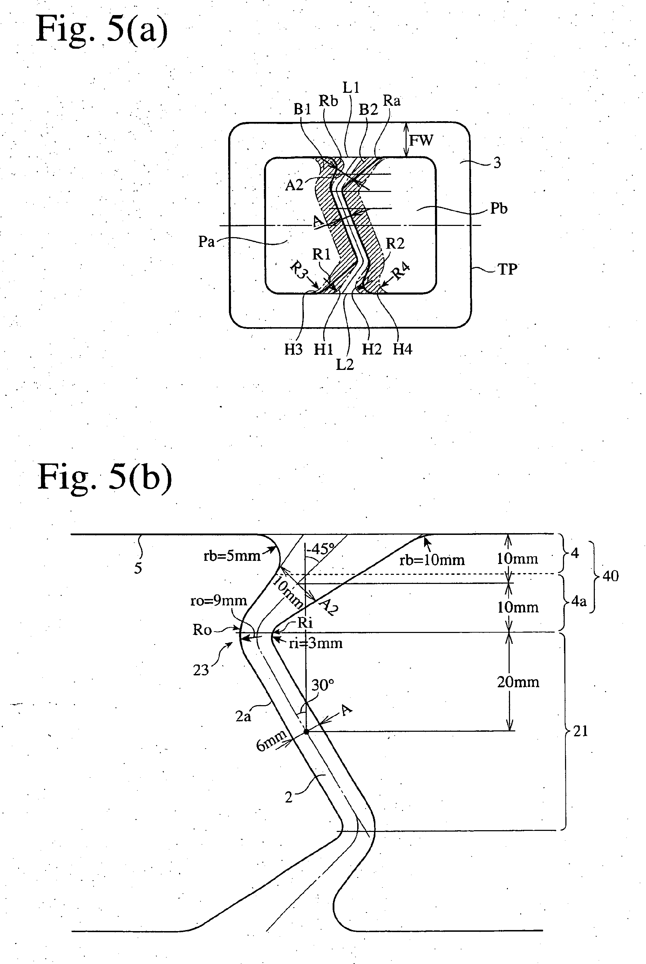

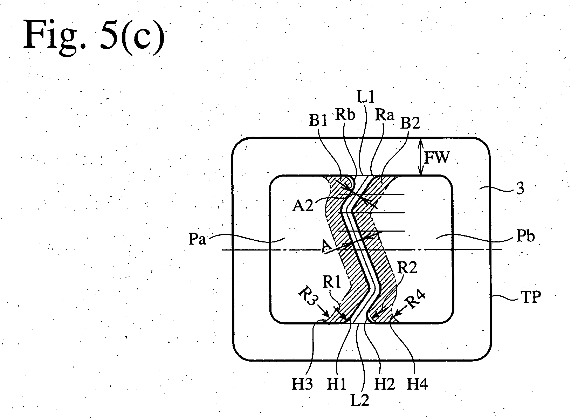

As shown in Fig. 5(a), a test piece TP was produced in the same manner as in Example 1, except that the partition wall was in an S shape. Fig. 5(b) is an enlarged view showing the partition wall of the test piece TP. With the longitudinal middle point O of the partition wall 2 as a center, the partition wall 2 has a 6-mm-thick, flat-plate-shaped center region 21 in a range within 1/2 of the length of the partition wall 2, and an end region 40 comprising a tapered region 4a and a connecting portion 4 outside the flat-plate-shaped center region 21. The center region 21 is inclined by an angle θ₁ of 30° relative to the partition wall 2 of Example 1, and the tapered region 4a is inclined by angle θ₂ of -45° relative to the partition wall 2 of Example 1, so that the overall partition wall 2 is in an S shape. The minimum thickness A of the partition wall 2 is 6 mm, the same as the thickness of the center region 21, and the tapered region 4a is gradually linearly widening from the end of the center region 21, so that the thickness A2 is 10 mm at a position of 3/8 of the length of the partition wall 2 from the longitudinal middle point O of the partition wall 2. The center region 21 is tangentially connected to the tapered region 4a with arcs Ri and Ro having radii ri (3 mm) and ro (9 mm) in a bent portion 23. Among those formed by the center region 21 and the tapered region 4a, an arc connecting the outer surfaces 2a of the partition wall 2 on a smaller angle side is expressed by Ri, and an arc on the other side is expressed by Ro. The connecting portion 4 is formed by an arc Ra having a radius of 10 mm and an arc Rb having a radius of 5 mm both tangentially connected to the tapered region 4a and the inner wall 5 of the tubular portion 10. An arc with an obtuse angle between the partition wall 2 and the inner wall 5 was Ra, and an arc with an acute angle was Rb. Table 1 shows the size of the test piece TP.

With the partition wall thus formed, each outer surface 2a of the partition wall 2 existed in a region (hatched portion B1, B2) sandwiched by (a) each inner line comprising a parallel line H1, H2 separate from the longitudinal centerline C of the partition wall by a distance of A/2, namely 3 mm, and an arc R1, R2 tangentially connected to the parallel line H1, H2 and the inner wall and having a radius r1, r2, wherein r1 of 10 mm was on the obtuse angle side, and r2 of 5 mm was on the acute angle side, meeting r1 + r2 = 2.5A, and (b) each outer line comprising a parallel line H3, H4 separate from the longitudinal centerline C of the partition wall by a distance of 3/2 x A, namely 9 mm, and an arc R3, R4 tangentially connected to the parallel line H3, H4 and the inner wall and having a radius r3, r4, wherein r3 of 16 mm was on the obtuse angle side, and r4 of 8 mm on the acute angle side, meeting r3 + r4 = 4A. The same thermal fatigue test as in Example 1 revealed that cracking occurred near the longitudinal center of the partition wall, but there were no cracks extending from the exhaust port to the outer surface of the test piece TP.

Comparative Example 3

As shown in Fig. 5(c), a test piece TP was produced in the same manner as in Example 2, except that the tapered region 4a of the partition wall 2 had a constant thickness of 6 mm, the same as that of the center region 21, and that it had arcs Ra and Rb having radii of 8 mm and 2 mm, respectively, with substantially no tapered region 4a. Table 1 shows the size of the test piece TP.

With the partition wall thus formed, the outer surface 2a of the partition wall 2 existed beyond the region (hatched portion B 1, B2) sandwiched by (a) each inner line comprising the parallel line H1, H2 and the arc R1, R2 tangentially connected to the parallel line H1, H2 and the inner wall, and (b) each outer line comprising the parallel line H3, H4 and the arc R3, R4 tangentially connected to the parallel line H3, H4 and the inner wall, even when any radii rl-r4 were 1/3 x A or more, meeting r1 + r2 = 1.9A, and r3 + r4 = 4A. The same thermal fatigue test as in Example 1 revealed that there were cracks extending from the exhaust port to the outer surface of the test piece TP in the connecting portions of the partition wall and the flange.

**Table 1**

| No. | Example 1 | Comparative Example 1 | Comparative Example 2 | Example 2 | Comparative Example 3 |
|---|---|---|---|---|---|
| Length of Partition Wall | 80 mm | 80 mm | 80 mm | 80 mm | 80 mm |
| Thickness of Center Region | 6 mm | 6 mm | 6 mm | 6 mm | 6 mm |
| Minimum Thickness A | 6 mm | 6 mm | 6 mm | 6 mm | 6 mm |
| A2⁽¹⁾ | 10 mm | 6 mm | 30 mm | 10 mm | 6 mm |
| Radius of Arc Region | r = 7 mm | r = 2 mm | r = 7 mm | ra = 10 mm rb = 5 mm | ra = 8 mm rb = 2 mm |
| Inclination⁽²⁾ of Partition Wall | θ₁ = 0° θ₂ = 0° | θ₁ = 0° θ₂= 0° | θ₁ = 0° θ₂ = 0° | θ₁ = 30° θ₂ = -45° | θ₁ = 30° θ₂ = -45° |
| Position ⁽³⁾ of Bent Portion | - | - | - | 20 mm | 20 mm |
| Radius of Bent Portion | - | - | - | ri = 3 mm ro = 9 mm | ri = 3 mm ro = 9 mm |

Note: (1) A2 was thickness at a position of 30 mm from the middle point of the partition wall.

(2) Inclination to the partition wall of Example 1, wherein θ₁ is an angle of the center region, and θ₂ is an angle of the tapered region.

(3) Distance from the middle point of the partition wall.

Example 3

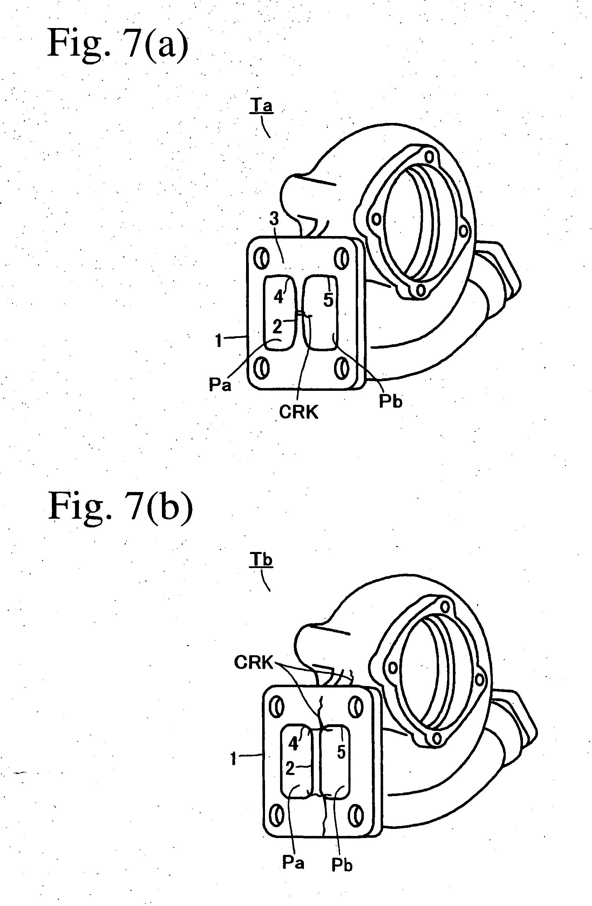

A turbine housing Ta shown in Fig. 7(a) was produced. The turbine housing Ta is used in series-four-cylinder, high-performance gasoline engine (not shown) with a displacement of 2000 cc. A turbine in the turbine housing was rotated by the pressure of an exhaust gas discharged from the engine and gathered by an exhaust manifold, to drive a compressor concentric with the turbine to compress the mixed gas, which is returned to the engine to increase the power of the engine.

As shown in Fig. 7(a), an opening end surface 3 of the turbine housing Ta has a substantially similar shape to that of the test piece TP of Example 1 shown in Fig. 4(b). Accordingly, the shape of its partition wall 2 will be explained referring to Fig. 4(b). The partition wall 2 has a length of 40 mm and the minimum thickness A of 3 mm. With the longitudinal middle point O as a center, the partition wall 2 has a 3-mm-thick, flat-plate-shaped center region 21 in a range within 1/2 of the length of the partition wall 2, and there is an end region 40 comprising a tapered region 4a and a connecting portion 4 outside the flat-plate-shaped center region 21. The minimum thickness A of the partition wall 2 is 3 mm, the same as the thickness of the center region 21, the tapered region 4a becomes gradually linearly wider from an end of the center region 21, and the thickness A2 is 5 mm at a position of 15 mm, 3/8 of the length of the partition wall 2, from the longitudinal middle point O of the partition wall 2. The connecting portion 4 was in an arc shape having a radius of 3.5 mm, which tangentially connected the tapered region 4a to the inner wall 5 of the tubular portion 10.

With the partition wall thus formed, each outer surface 2a of the partition wall 2 existed in a region (hatched portion B1, B2) sandwiched by (a) each inner line comprising a parallel line H1, H2 separate from the longitudinal centerline C of the partition wall by a distance of A/2, namely 1.5 mm, and an arc R1, R2 tangentially connected to the parallel line H1, H2 and the inner wall and having a radius r1, r2, wherein both r1, r2 were 2.85 mm, meeting r1 + r2 = 1.9A, and (b) each outer line comprising a parallel line H3, H4 separate from the longitudinal centerline C of the partition wall by a distance of 3/2 x A, namely 4.5 mm, and an arc R3, R4 tangentially connected to the parallel line H3, H4 and the inner wall and having a radius r3, r4, wherein both r3, r4 were 6 mm, meeting r3 + r4 = 4A. Portions of the turbine housing Ta other than the flange and the partition wall, which were mainly as thick as 2.5-5.5 mm, were formed from heat-resistant austenitic cast steel, through a predetermined heat treatment and machining.

The same thermal fatigue test as in Example 1 was conducted on the turbine housing Ta using the thermal fatigue test machine 40. The thermal fatigue test comprised 1000 cycles each comprising two steps of (i) heating the turbine housing Ta until the temperature of a center portion of the partition wall 2 reached 1000°C, and keeping it for 10 minutes, and (ii) stopping the supply of a combustion gas to cool it, and keeping it for 10 minutes. Fig. 7(a) shows cracks CRK generated in the turbine housing Ta after the thermal fatigue test. The cracks CRK were generated substantially in the center portion of the partition wall 2, but no cracks penetrating to the outer surface of the turbine housing were observed.

Comparative Example 4

The turbine housing Tb shown in Fig. 7(b) was produced like the turbine housing Ta of Example 3, except that the tapered region 4a of the partition wall 2 had a constant thickness of 3 mm, the same as that of the center region 21, meaning that there was substantially no tapered region 4a, and that an arc tangentially connected to the partition wall 2 and the inner wall 5 had a radius of 2 mm. The opening end surface 3 of the turbine housing Tb has a substantially similar shape to that of the test piece TP of Comparative Example 1 shown in Fig. 4(d).

In the turbine housing Tb, the outer surface 2a of the partition wall 2 existed beyond the region (hatched portion B1, B2) sandwiched by (a) each inner line comprising a parallel line H1, H2 separate from the longitudinal centerline C of the partition wall by a distance of A/2, and an arc R1, R2 tangentially connected to the parallel line H1, H2 and the inner wall, and (b) each outer line comprising a parallel line H3, H4 separate from the longitudinal centerline C of the partition wall by a distance of 3/2 x A, and an arc R3, R4 tangentially connected to the parallel line H3, H4 and the inner wall, even when any radii r1-r4 were 1/3 x A or more, meeting r1 + r2 = 1.9A and r3 + r4 = 4A.

A thermal fatigue test conducted on the turbine housing Tb under the same conditions as in Example 3 revealed that cracks CRK penetrating to the outer surface of the turbine housing Tb were generated in 318 cycles. Fig. 7(b) shows the cracks CRK In the turbine housing Tb, an exhaust gas in the exhaust port Pa or Pb ejected outside through the cracks CRK, causing exhaust interference and making the operation of the turbine housing unstable, resulting in decrease in engine performance.

The above Examples verify that the exhaust member of the present invention is free from cracks extending from the exhaust port to the outer surface of the exhaust member, without suffering from extreme weight increase.

### EFFECT OF THE INVENTION

Because the exhaust member of the present invention having the above structure is free from cracks penetrating to the outer surface without weight increase and substantial restriction in the cross section shape of the exhaust port, the engine operation is stabilized without performance decrease.

## Claims

1. An exhaust member having two or more exhaust ports separated by a partition wall extending between an inner wall of a tubular portion, wherein said partition wall has the minimum thickness A in a range within 1/2 of the length of said partition wall from its longitudinal middle point as a center, when viewed in an arbitrary transverse cross section of said tubular portion (including an opening end surface) having said partition wall, and wherein each outer surface of said partition wall exists in a region sandwiched by (a) an inner line comprising a parallel line H1, H2 separate from a longitudinal centerline of said partition wall by a distance of A/2, and an arc R1, R2 tangentially connected to said parallel line H1, H2 and said inner wall and having a radius r1, r2, wherein both r 1 and r2 are 1/3 x A or more, meeting r1 + r2 = 1.9A, and (b) an outer line comprising a parallel line H3, H4 separate from the longitudinal centerline of said partition wall by a distance of 3/2 x A, and an arc R3, R4 tangentially connected to said parallel line H3, H4 and said inner wall and having a radius r3, r4, wherein both r3 and r4 are 1/3 x A or more, meeting r3 + r4 = 4A.

2. The exhaust member according to claim 1, wherein radii r1, r2 of said arcs R1, R2 meet the condition of r1 + r2 = 2.5A.

3. The exhaust member according to claim 1 or 2, wherein the minimum thickness A of said partition wall is 2-10 mm, and wherein each outer surface of said partition wall is tangentially connected to said inner wall with an arc having a radius of 2-13 mm in an arbitrary transverse cross section of said tubular portion.
